# EUROPEAN PATENT APPLICATION

(11) **EP 4 322 492 A1**
(43) Date of publication of application: **14.02.2024**
(21) Application number: 22189244.1
(22) Date of filing: 08.08.2022
(51) Int. Cl.: H04L 41/12, H04L 41/0213, H04L 41/16, H04L 43/04

(54) **IDENTIFICATION OF DEVICES AND THEIR ROLE IN A COMMUNICATION NETWORK BASED ON MACHINE LEARNING**

(71) Applicant: Siemens Aktiengesellschaft, 80333 München (DE)
(72) Inventor: Huth, Hans-Peter, 80638 München (DE); Michailow, Nicola, 81825 München (DE); Reisacher, Marco, 81669 München (DE)
(74) Representative: Siemens Patent Attorneys

(57) **Abstract**

The invention discloses a system for obtaining information about an unknown device (X) connected to a communication network (6), the system comprising:
- at least one unknown device (X),
- first devices (1.1),
- second devices (2.1), whereby type and role of at least some of the second devices (2.1) in the communication network are known,
- a first managed layer-2 switching unit (1.2), whereby the unknow device (X) and the first devices (1.1) are connected to the first managed layer-2 switching unit (1.2),
- second managed layer-2 switching units (2.2), whereby every second device (2.1) is connected to at least one of the second managed layer-2 switching units (2.2),
- a collector unit (3) configured to collect data from the first and second managed layer-2 switching unit (1.2, 2.2), and
- an analytics unit (4) configured to perform analytic algorithms using the collected data,
characterized by:
the analytics unit (4) is configured
- to identify a second cluster (2) which comprises some of the second devices (2.1) by evaluating the data,
- whereby the communication behaviour of the second devices (2.1) in the second cluster (2) is similar to the communication behaviour of a first cluster (1) comprising the unknown device (X) and the first devices (1.1), and
- to estimate type and role of the unknown device (X) based on the information about the second devices (2.1) in the second cluster (2) by comparing the first and the second cluster (1, 2).

A related automated method is disclosed as well.

## Description

### FIELD OF THE INVENTION

The present invention relates to a system and a method for automatically obtaining information, like role or type, about an unknown device connected to a communication network.

### BACKGROUND OF THE INVENTION

Industrial IoT networks not only might be large, but they also tend to have a long lifetime. In some cases, these installations are not well documented and have a mix of installed devices of a very different age. A method of automatically detecting and identifying devices would be beneficial, as a manual process is costly. For managed devices, this can be solved from a management system, e.g., using SNMP. This is not possible for older, unmanaged devices as those cannot be accessed by a management unit, and often installation of extra SW (for a management agent) is not possible.

Know methods for retrieving information of unknown devices in a communication network are active probing (port scanning) and deep packet inspection respective traffic analysis. The first method however creates unwanted extra traffic in the network and may interfere with the device. The second method requires traffic capturing at a point where the data traffic of the device(s) in question are available, which creates high costs.

### SUMMARY OF THE INVENTION

The objective of the present invention is to provide a solution for classifying the type of an unknown device and/or identifying the unknown device.

To accomplish the objective, the present invention provides a solution according to the independent claims. Advantageous embodiments are provided in the dependent claims.

According to an aspect of the invention a method and a system is disclosed that supports identification - or at least classification - of unknown devices in a communication network in a purely passive way without any impact on the device or the communication network.

The invention claims a system for obtaining information about an unknown device connected to a communication network, the system comprises:
- at least one unknown device,
- first devices,
- second devices, whereby type and role of some of the second devices in the communication network are known,
- a first managed layer-2 switching unit, whereby the unknow device and the first devices are connected to the first managed layer-2 switching unit, using exactly one switch unit port per device,
- second managed layer-2 switching units, whereby every second device is connected to at least one of the second managed layer-2 switching units,
- a collector unit configured to collect data from the first and second managed layer-2 switching unit, and
- an analytics unit configured to perform analytic algorithms using the collected data,
   whereby the analytics unit is configured
- to identify a second cluster which comprises some of the second devices by evaluating the data,
- whereby the communication behaviour of the second devices in the second cluster is similar to the communication behaviour of a first cluster comprising the unknown device and the first devices, and
- to estimate type and role of the unknown device based on the information about the second devices in the second cluster by comparing the first and the second cluster,
- whereby algorithms to estimate similarity uses machine learning and/or a model-based approach.

A device is considered to be unknown if its type (i.e., PC, Server, industrial I/O or video cam) or role are not known.

A managed layer-2 switching unit is a switch which has remote access for configuration and control, preferable by means of the SNMP standard.

Communication behaviour comprises traffic characteristics like e.g., bandwidth or packet sizes, and from which other devices the device receives data or to which other devices the device sends data.

A cluster is a group of devices having communication relations
"Similar" refers to a comparable communication behavior where the deviation and the key parameters for comparison are determined by a machine learning algorithm in a training phase.

One advantage of the invention is that the proposed solution of identifying unknown devices connected to a communication network can be easily integrated into an existing network management system.

In a further embodiment of the system the collector unit is configured to collect the data periodically.

In a further embodiment of the system the collected data comprises self-learning tables, whereby one self-learning table for each port of the first and second managed layer-2 switching unit is containing the MAC addresses of the first, second and unknown devices, which is reached via the respective switching unit port, whereby only one first, second or unknown device is connected to one switching unit port.

In a further embodiment of the system the communication behaviour comprises at least one of the following items:
- Pairs of source-MAC address to destination-MAC address or source-IP address to destination-IP address,
- time when the data acquisition was performed,
- packet size or distribution of last M packets.

In a further embodiment of the system analytics unit is configured to construct a relation graph based on the MAC or IP addresses of the first, second and unknown devices in the first and second switching units and switch ID and switch port address of the switching units.

In a further embodiment of the system the analytics unit comprises a graph neural machine learning method, whereby the analytics unit is configured to use the relation graph as input for the graph machine learning method to estimate the type and role of the unknown device.

In a further embodiment of the system the graph machine learning methods comprises a graph neural network.

Further, the invention claims an automated method for obtaining information about an unknown device of a system connected to a communication network, whereby the system comprises:
- at least one unknown device,
- first devices,
- second devices, whereby type and role of some of the second devices in the communication network are known,
- a first managed layer-2 switching unit, whereby the unknow device and the first devices are connected to the first managed layer-2 switching unit, using exactly one switching unit port per device,
- second managed layer-2 switching units, whereby every second device is connected to at least one of the second managed layer-2 switching units,
- a collector unit configured to collect data from the first and second managed layer-2 switching unit, and
- an analytics unit configured to perform analytic algorithms using the collected data,
with the method steps of:
- identifying a second cluster which comprises some of the second devices by evaluating the data by the analytics unit,
- whereby the communication behaviour of the second devices in the second cluster is similar to the communication behaviour of a first cluster comprising the unknown device and the first devices, and
- estimating type and role of the unknown device by the analytics unit based on the information about the second devices in the second cluster by comparing the first and the second cluster,
- whereby algorithms to estimate similarity uses machine learning and/or a model-based approach.

In a further embodiment of the method the data are periodically collected by the collector unit.

In a further embodiment of the method the collected data comprises self-learning tables, whereby one self-learning table for each port of the first and second managed layer-2 switching unit is containing the MAC addresses of the first, second and unknown devices, which is reached via the respective switching unit port, whereby only one first, second or unknown device is connected to one switching unit port.

In a further embodiment of the method the communication behaviour comprises at least one of the following items:
- Pairs of source-MAC address to destination-MAC address or source-IP address to destination-IP address,
- time when the data acquisition was performed,
- packet size or distribution of last M packets.

In a further embodiment the method comprises:
constructing a relation graph by the analytics unit based on the MAC or IP addresses of the first, second and unknown devices in the first and second switching units and switch ID and switch port address of the switching units.

In a further embodiment of the method the analytics unit comprises a graph neural machine learning method, and characterized by:
using the relation graph as input for the graph machine learning method by the analytics unit to estimate the type and role of the unknown device.

In a further embodiment of the method the graph machine learning methods comprises a graph neural network.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of the communication network,
- FIG. 2: shows the prediction of edges and weights based on recurring patterns in a graph,
- FIG. 3: shows a prediction of existence and type of nodes based on recurring patterns in a graph,
- FIG. 4: shows the prediction of type of nodes based on recurring patterns in a graph,
- FIG. 5: shows the block diagram of the main components of the system,
- FIG. 6: shows the block diagram of a first embodiment of the system, and
- FIG. 7: shows the block diagram of a second embodiment of the system.

### DETAILED DESCRIPTION OF THE DISCLOSURE

Assume a communication network comprised of interconnected routers, switches, (= first and second layer-2 switching unit 1.2 and 2.2) and devices (= first and second device 1.1 and 2.1, e.g., industrial PCs, sensors, etc.). There is also at least one unknown device X in said communication network.

The objective is to classify the type and/or identify the unknown device X based on non-intrusive observations collected in the communication network, that is, without creating extra traffic in the communication network. The disclosure describes how to use traffic relations as an input for machine learning analytics, like artificial intelligence.

These observations may be any combination of:
- Pairs of source-MAC to destination-MAC,
- Packet size distribution since last polling at a switch, or
- data rates at a switch port.

This information is collected in all switches or at least at the boarders of a network.

Based on these observations, in the literature called "behaviour fingerprints" for each network device (both known 1.1 and 1.2 and unknown X) can be derived. The behaviour fingerprints can be preferably represented in the form of time-varying graphs (directed or undirected), where each graph node represents a device 1.2, 2.2 and X, or a router / switching unit 1.1 and 2.1 and each edge represent a network segment of the communication network.

The aforementioned observations of inter-packet time, packet size, etc. can be represented as weights associated with the edges (= network segments) in the graph.

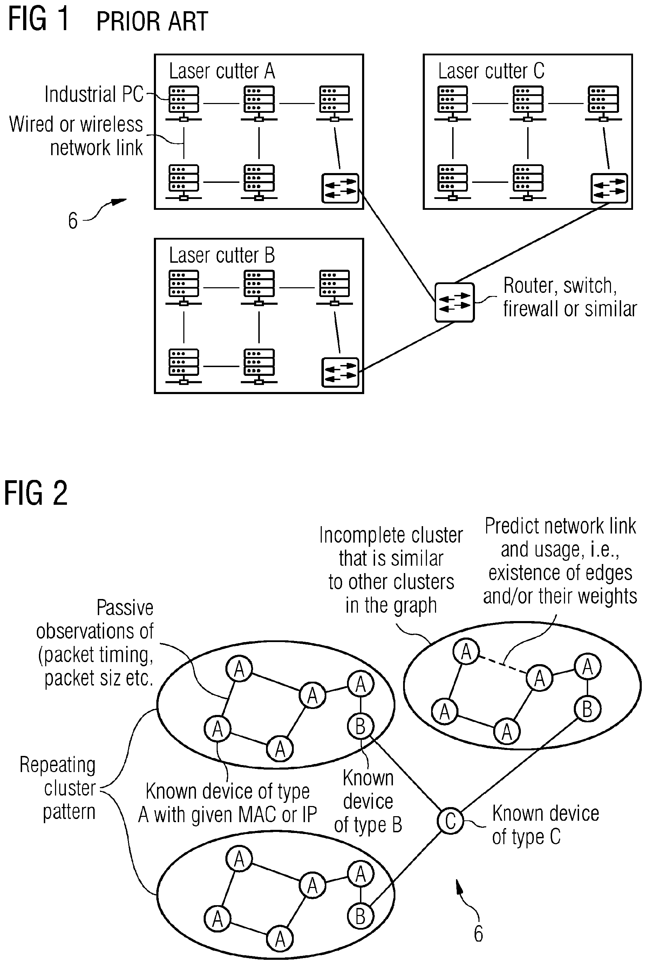

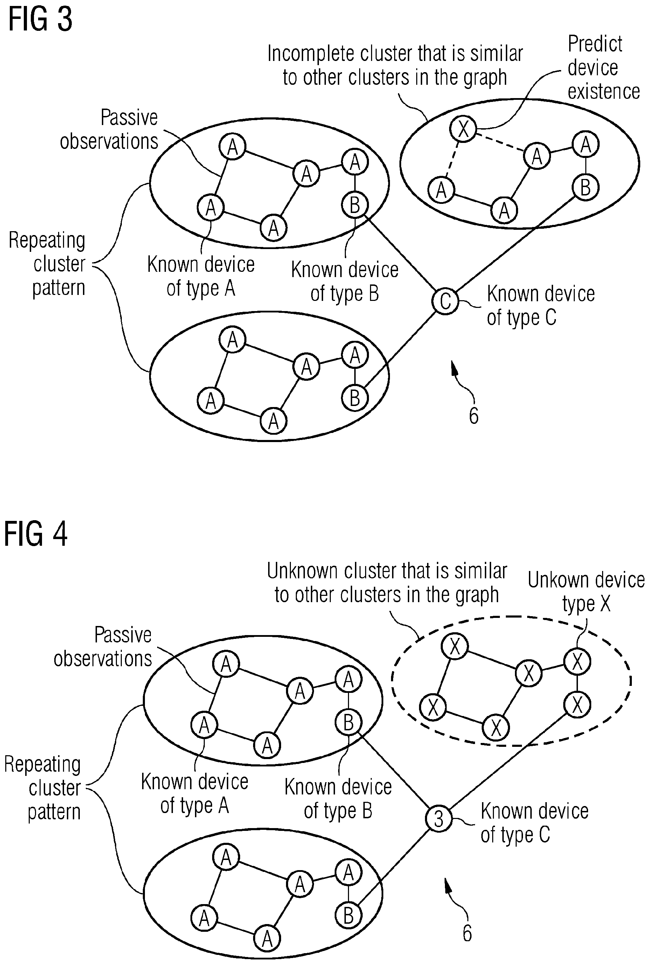

With this representation, graph machine learning approaches, as they are used in web search engines and social media networks can be applied. This is, in a way, treating a "communication network of IoT devices in a factory" like a "group of friends on Facebook" and trying to anticipate the behaviour of individual nodes based on the group's dynamic. It can be employed to:
- Predict the emergence of edges in the graph (= future communication links between given source / destination devices).
- Predict weights on the edges of the graph (= future packet transmission times, packet sizes, etc.). An illustration with explanation is shown in FIG. 2.
- Predict nodes in the graph (= unknown devices X). An illustration with explanation is shown in FIG. 3
- Predict clusters in the graph (= repeating patterns that originate from corresponding patterns in the real world, e.g., communication system of FIG. 1, there is a laser cutter station comprised of five industrial PCs and a switch that communicate with each other in a given pattern. In the factory, there are three such laser cutter stations. The graph would show three clusters with six nodes each that have similar edges among each other.) An illustration with explanation is shown in FIG. 4.

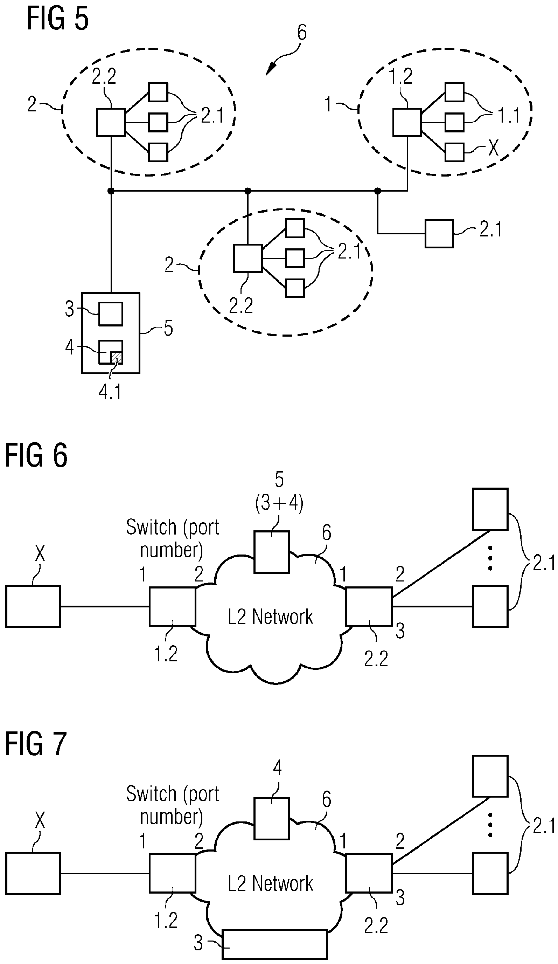

FIG. 5 shows a block diagram of the most important components of the disclosed system. First devices 1.1 and the unknow device X are connected via a first managed layer-2 switching unit 1.2 to a communication network 6. These components are part of a first cluster 1. Second devices 2.1 are connected via a second managed layer-2 switching unit 2.2 to the communication network 6. These components are part of a second cluster 2. A date processing unit 5 comprising a collector unit 3 and an analytics unit 4 are connected directly or indirectly to the communication network 6 as well. The analytics unit 4 comprises a graph neural network 4.1.

The algorithm for getting the input data to the machine learning is as follows. The system comprises several components (see FIG. 6):
- The unknown device X itself.
- At least one managed layer-2 switching unit 1.1 where the unknown device X - and potentially other devices - is/are attached. A managed switch offers possibilities to read the self-learning tables (see prior art RFC 2571, An Architecture for Describing SNMP Management Frameworks, https://datatracker.ietf.org/doc/html/rfc2571) from remote, e.g., via SNMP Bridge MIB. That is, we expect a table for each switch port containing the MAC addresses of the devices, which can be reached via the respective switch port. We assume that exactly one device is attached to one switch port.
- At least one other second device 2.1, which communicates with the unknown device X.
- Optionally, but preferably, there are many more second devices 2.1 that communicate with each other. We assume that some second devices 2.1 are known regarding their type and role in the communication network.
- A data processing unit 5 comprising a collector unit 3 and an analytics unit 4, which can collect data as described below and can perform analytic algorithms.

Assuming all devices and switches are up and running, the basic solution sequence is:
1. The data processing unit 3 (= node in the communication network) collects the relevant data, including the self-learning tables (also known as forwarding tables), in regular intervals (= periodically) from the layer-2 switching units 1.2 and 2.2 as described above.
2. The data processing unit 3 constructs a relation graph based on the MAC addresses found. The data which shall be collected is, at its minimum, the MAC address of the devices X, 1.1 and 2.2 in the switches 1.2 and 2.2 together with switch ID and switch port. Other information available at the switching units 1.2 and 2.2 is optional for this invention.
3. An analytics engine running on the analytics unit 4 now uses this graph (and optionally other information) as input for a machine learning algorithm to estimate the type and/or role of the unknown device X. This can come in two variants, a) direct relations and b) identify clusters of similar communication behaviour (see FIG. 4)

### Variant (FIG. 7)

Instead of reading the forwarding tables of the switches or in addition, in a non-routed, so-called layer-2 network 6, the information with which other devices the unknown device communicates can also be retrieved as follows:
- A collector unit 3 is used, which is another device in the communication network 6 or a functionality on a switching unit 1.2 or 2.2.
- The collector unit 3 captures ARP messages. ARP, the Address Resolution Protocol (https://en.wikipedia.org/wiki/Address_Resolution_Protocol), is a standard protocol integrated into all known operating systems. The ARP Request messages are broadcasted, so they can be received anywhere in the communication network 6. They contain the sender's MAC address and the receiver's IP address.
- When the unknown device X want to communicate with another device 1.1 and 2.1 (or vice versa), it will issue ARP requests to resolve the MAC address of the desired communication partner. The detector unit 6 can read these ARP requests and build a relation table as described before, but between MAC and IP addresses.
- The collector unit 3 can resolve the IP addresses to MAC addresses by known methods, e.g., using ICMP Echo reply (aka 'ping') or other means.
- Now the collector unit 3 can construct the relation graph as input for the graph machine learning algorithms of the analytics unit 4 described above.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: First cluster
- 1.1: First device
- 1.2: First layer-2 switching unit
- 2: Second cluster
- 2.1: Second device
- 2.2: Second layer-2 switching unit
- 3: collector unit
- 4: analytics unit
- 4.1: graph neural network
- 5: data processing unit
- 6: communication network
- X: unknown device

## Claims

1. A system for obtaining information about an unknown device (X) connected to a communication network (6), the system comprising:
- at least one unknown device (X),
- first devices (1.1),
- second devices (2.1), whereby type and role of at least some of the second devices (2.1) in the communication network are known,
- a first managed layer-2 switching unit (1.2), whereby the unknow device (X) and the first devices (1.1) are connected to the first managed layer-2 switching unit (1.2), using exactly one switching unit port per device,
- second managed layer-2 switching units (2.2), whereby every second device (2.1) is connected to at least one of the second managed layer-2 switching units (2.2),
- a collector unit (3) configured to collect data from the first and second managed layer-2 switching unit (1.2, 2.2), and
- an analytics unit (4) configured to perform analytic algorithms using the collected data,
**characterized by**:
the analytics unit (4) is configured
- to identify a second cluster (2) which comprises some of the second devices (2.1) by evaluating the data,
- whereby the communication behaviour of the second devices (2.1) in the second cluster (2) is similar to the communication behaviour of a first cluster (1) comprising the unknown device (X) and the first devices (1.1), and
- to estimate type and role of the unknown device (X) based on the information about the second devices (2.1) in the second cluster (2) by comparing the first and the second cluster (1, 2),
- whereby algorithms to estimate similarity uses machine learning and/or a model-based approach.

2. The system according to claim 1, whereby
the collector unit (3) is configured to periodically collect the data.

3. The system according to claim 1 or 2, whereby the collected data comprises self-learning tables, whereby one self-learning table for each port of the first and second managed layer-2 switching unit (1.2, 2.2) is containing the MAC addresses of the first, second and unknown devices (1.1, 2.1, X), which is reached via the respective switching unit port, whereby exactly one first, second or unknown device (1.1, 2.1, or X) is connected to one switching unit port.

4. The system according to one of the claims 1 to 3, whereby the communication behaviour comprises at least one of the following items:
- Pairs of source-MAC address to destination-MAC address or source-IP address to destination-IP address,
- time when the data acquisition was performed,
- packet size or distribution of last M packets.

5. The system according to claim 4, whereby
analytics unit (4) is configured to construct a relation graph based on the MAC or IP addresses of the first, second and unknown devices (X) in the first and second layer-2 switching units (1.2, 2.2) and switch ID and switch port address of the switching units (1.2, 2.2).

6. The system according to claim 5, whereby
the analytics unit (4) comprises a graph neural machine learning method, whereby the analytics unit is configured to use the relation graph as input for the graph machine learning method to estimate the type and role of the unknown device (X).

7. The system according to claim 6, whereby
the graph machine learning methods comprises a graph neural network (4.1).

8. Automated method for obtaining information about an unknown device (X) of a system connected to a communication network (6), whereby the system comprises:
- at least one unknown device (X),
- first devices (1.1),
- second devices (2.1), whereby type and role of at least some of the second devices (2.1) in the communication network (6) are known,
- a first managed layer-2 switching unit (1.2), whereby the unknow device (X) and the first devices (1.1) are connected to the first managed layer-2 switching unit (1.2), using exactly one switching unit port per device,
- second managed layer-2 switching units (2.2), whereby every second device (2.1) is connected to at least one of the second managed layer-2 switching units (2.2),
- a collector unit (3) configured to collect data from the first and second managed layer-2 switching unit (1.2, 2.2), and
- an analytics unit (4) configured to perform analytic algorithms using the collected data,
**characterized by** the steps:
- identifying a second cluster (2) which comprises some of the second devices (2.2) by evaluating the data by the analytics unit (4),
- whereby the communication behaviour of the second devices (2.1) in the second cluster (2) is similar to the communication behaviour of a first cluster (1) comprising the unknown device (X) and the first devices (1.1), and
- estimating type and role of the unknown device (X) by the analytics unit (4) based on the information about the second devices (2.1) in the second cluster (2) by comparing the first and the second cluster (1, 2),
- whereby algorithms to estimate similarity uses machine learning and/or a model-based approach.

9. The method according to claim 8, whereby
the data are periodically collected by the collector unit (3) .

10. The method according to claim 8 or 9, whereby the collected data comprises self-learning tables, whereby one self-learning table for each port of the first and second managed layer-2 switching unit (1.2, 2.2) is containing the MAC addresses of the first, second and unknown devices (1.1, 2.1, X), which is reached via the respective switching unit port, whereby exactly one first, second or unknown device (1.1, 2.1, X) is connected to one switching unit port.

11. The method according to one of the claims 8 to 10, whereby
the communication behaviour comprises at least one of the following items:
- Pairs of source-MAC address to destination-MAC address or source-IP address to destination-IP address,
- time when the data acquisition was performed,
- packet size or distribution of last M packets.

12. The method according to claim 11, **characterized by**:
constructing a relation graph by the analytics unit (4) based on the MAC or IP addresses of the first, second and unknown devices (1.1, 2.1, X) in the first and second switching units (1.2, 2.2) and switch ID and switch port address of the switching units.

13. The method according to claim 12, whereby
the analytics unit (4) comprises a graph neural machine learning method, and **characterized by**:
using the relation graph as input for the graph machine learning method by the analytics unit (4) to estimate the type and role of the unknown device (X).

14. The method according to claim 13, whereby
the graph machine learning methods comprises a graph neural network (4.1).
